# EUROPEAN PATENT APPLICATION

(11) **EP 1 079 025 A2**
(43) Date of publication of application: **28.02.2001**
(21) Application number: 00117564.5
(22) Date of filing: 16.08.2000
(51) Int. Cl.: E01H 5/04, E01H 5/09, F02M 31/08, F02M 15/02

(54) **Vertical shaft snow engine**

(30) Priority: 26.08.1999 US 383553
(71) Applicant: TECUMSEH PRODUCTS COMPANY, Tecumseh Michigan 49286 (US)
(72) Inventor: Stenz, Dennis N., Mt Calvary, Wisconsin 53057 (US)
(74) Representative: Linde, Leif

(57) **Abstract**

A housing assembly for use in a vertical shaft snow thrower for providing pre-heated air to the carburetor (30) and for protecting the recoil starter from falling snow. The housing assembly comprises a shroud (36) and a duct member (34) which work together to create a passageway (44) from the muffler (28) to the carburetor (30) through which air travels and is heated. The duct member (34) forms three walls of the passageway, and the shroud, which is aligned and secured above the duct member and recoil starter, forms the fourth wall. The shroud includes an opening (58) for entry of cool air which cools the engine while preventing falling snow from entering the recoil starter. The duct member (34) also includes a linkage shield (37) which forms a barrier between the linkage and snow entering the engine and thereby prevents freeze-up of the governor linkage.

## Description

The present invention relates to a method and housing assembly for providing pre-heated air to the carburetor of a snow thrower and for protecting the recoil starter from falling snow.

Horizontal shaft engine snow throwers are conventionally provided with a screen that allows air to enter the engine. Protection against snow falling into the recoil starter is not a concern because the recoil starter is disposed horizontally. By contrast, in a vertical shaft engine snow thrower, the recoil starter is disposed on top of the engine. Thus, screens do not protect the recoil starter in a vertical shaft snow thrower from falling snow.

Another problem with known vertical snow throwers involves the carburetor "freezing up" because the ambient air provided thereto is cold and moist. Additionally, the conditions in which a snow thrower is operated often result in the linkage freezing up. It is known to utilize the heat generated by exhaust gases to heat ambient air before it is drawn into the carburetor in a chain saw or an outboard marine engine, for example. These designs involve passing ambient air over fins in a heat exchanger or passing ambient air through a conduit disposed within a gas collecting chamber in the muffler before being drawn into the carburetor.

One known vertical shaft engine snow thrower is constructed such that the engine is mounted on top of the snow thrower and a chain drives the impeller. The carburetor is provided with a protective cover; however, the engine and governor linkage are exposed to the environment.

A more effective means to protect the recoil starter from falling snow and a simpler method of pre-heating air entering the carburetor in a vertical shaft snow thrower is desired.

The present invention provides a housing assembly for a vertical shaft snow thrower that provides pre-heated air to the carburetor, protects the linkage from external elements and prevents snow from entering the recoil starter.

In one form thereof, the present invention provides a snow thrower including an internal combustion engine having a muffler and a carburetor. A duct member is attached to the engine and partially encloses the muffler. The duct member includes an inlet disposed proximate the muffler and an outlet disposed proximate the carburetor. The duct member defines a passageway connecting the inlet to the outlet, whereby ambient air is drawn into the duct member, pre-heated by the muffler and passed through the passageway to the carburetor.

In a preferred form, the passageway defines a chamber disposed proximate the outlet. The snow thrower further comprises a shroud disposed above the engine and connected to the duct member, the shroud defining an opening on an underside thereof, whereby the opening allows entry of ambient air and minimizes entry of snow. The shroud defines a wall of the passageway and further comprises an insulating wall disposed intermediate the opening of the shroud and the passageway, whereby snow drawn in with the cool air entering the opening of the shroud is prevented from contacting warmed surfaces of the duct member. The insulating wall comprises a pair of spaced partitions depending downwardly from the shroud. The snow thrower further comprises a substantially vertically oriented drive shaft.

In another form thereof, the present invention provides a snow thrower comprising an internal combustion engine having a muffler, a carburetor and a linkage. A housing assembly is attached to the snow thrower and includes an opening on an underside thereof, whereby the opening minimizes entry of snow but not ambient air. The housing also defines a passageway extending from the muffler to the carburetor, whereby pre-heated air passes through the passageway from the muffler to the carburetor.

In a preferred form, the passageway is substantially sealed and the housing assembly includes a duct member and a shroud. The passageway includes a wall defined by said shroud. The passageway is defined by the duct member and includes an inlet disposed proximate the muffler and an outlet disposed proximate the carburetor. The passageway extends from the inlet to the outlet and a chamber is disposed proximate the outlet.

In another form, the housing assembly further includes a carburetor cover at least partially covering the carburetor. The carburetor cover includes a slot adapted to receive a lever therethrough. The carburetor cover protects the carburetor from snow and substantially contains warm air surrounding the carburetor.

In another preferred form, the housing assembly further comprises an insulating wall disposed intermediate the opening and the passageway, whereby cool air entering the opening is insulated from pre-heated air passing through the passageway.

The advantage of the housing assembly including the duct member and shroud is that the unit is simple and more effective than previous designs. The duct member and shroud are also conveniently aligned with respect to one another. This arrangement reduces the cost of parts and manufacturing while effectively providing heated air to the carburetor and thereby preventing freeze-up of the governor linkage as well as the carburetor. The shroud effectively minimizes snow from entering the recoil starter while still allowing sufficient cooling air to enter the engine. The shroud also provides sufficient insulation between the heated air being drawn into the carburetor and the cool air being drawn into the engine. That is, the snow that does enter with the cooling air does not adhere to warm surfaces of the passageway.

The above mentioned and other features and objects of this invention, and the manner of attaining them, will become more apparent and the invention itself will be better understood by reference to the following description of an embodiment of the invention taken in conjunction with the accompanying drawings, wherein:
Fig. 1 is a perspective view of a vertical shaft engine snow thrower which embodies the shroud and housing assembly of the present invention;
Fig. 2 is a perspective view of the snow thrower of Fig. 1 showing the shroud and duct member exploded away;
Fig. 3 is a top plan view of the shroud and duct member installed on the snow thrower of Fig. 1 with concealed parts and features in dashed lines for illustration;
Fig. 4 is an end elevation of the shroud and duct member installed on the snow thrower of Fig. 1 with concealed parts and features in dashed lines for illustration;
Fig. 5 is a side elevation of the shroud and duct member installed on the snow thrower of Fig. 1 with concealed parts and features in dashed lines for illustration;
Fig. 6 is an enlarged perspective view of a duct member incorporating the present invention;
Fig. 7 is an enlarged bottom view of the shroud incorporating the present invention; and
Fig. 8 is a cross sectional view of the shroud and duct member illustrated in Fig. 5.

Corresponding reference characters indicate corresponding parts throughout the several views. Although the drawings represent embodiments of the present invention, the drawings are not necessarily to scale and certain features may be exaggerated in order to better illustrate and explain the present invention.

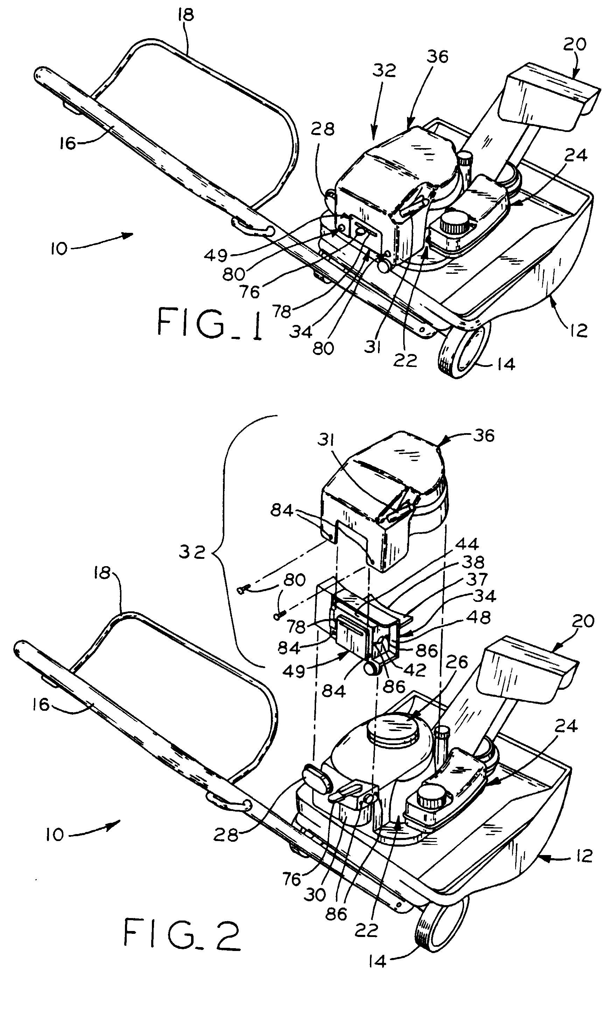

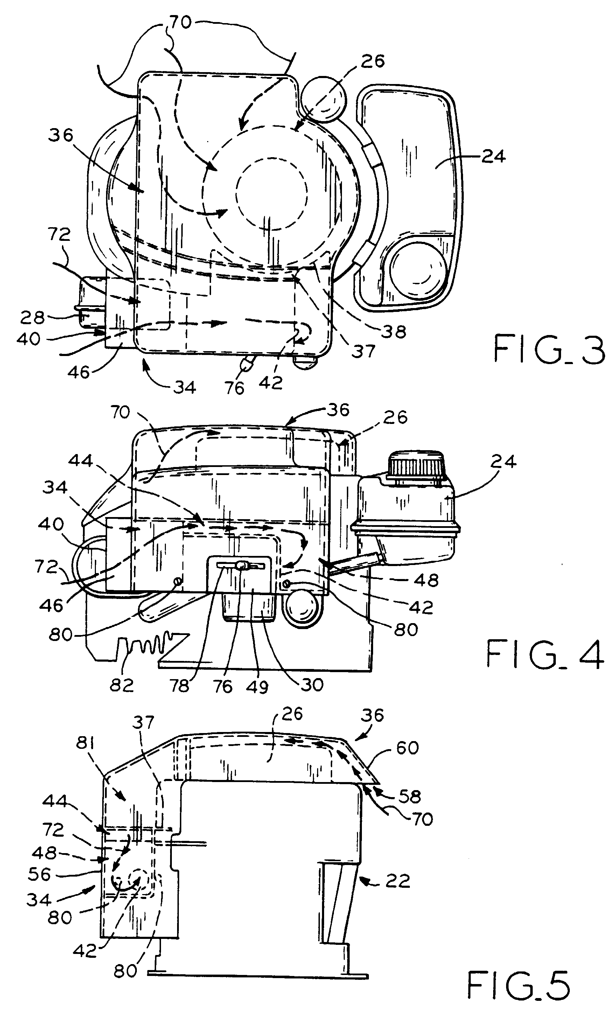

Referring to Figs. 1 and 2, snow thrower 10 having a substantially vertically oriented drive shaft (not shown) comprises snow thrower body 12, wheels 14, handle 16, engaging lever 18, and discharge chute 20. The rear of snow thrower body 12 rests upon wheels 14 which facilitate movement of snow thrower 10. U-shaped handle 16 is secured to and extends from the back of snow thrower body 12. Engaging lever 18 is attached to the top of handle 16, extending perpendicular therefrom. When lever 18 is pulled toward handle 16, power is transmitted through a V-belt which connects the crankshaft (not shown) of engine 22 to the impeller (not shown). The impeller is activated and begins rotating about a horizontal shaft (not shown), thereby thawing snow from the ground into body 12 and then propelling the snow through discharge chute 20.

Positioned above snow thrower body 12 is internal combustion engine 22 with fuel tank 24 located adjacent thereto, as can be seen in Fig. 2. Recoil starter 26 is situated above engine 22 having muffler 28 and carburetor 30 attached thereto. Muffler 28 and carburetor 30 are disposed rearwardly of starter 26. A starter cord (not shown) is secured at one end and wound about recoil starter 26. The starter cord is then fed through a hole in shroud 36 and fixed to handle 31. By pulling handle 31 and thus the starter cord, recoil starter 26 is rotated, thereby causing the vertical crankshaft to turn, which in turn starts internal combustion engine 22 and thus snow thrower 10 running.

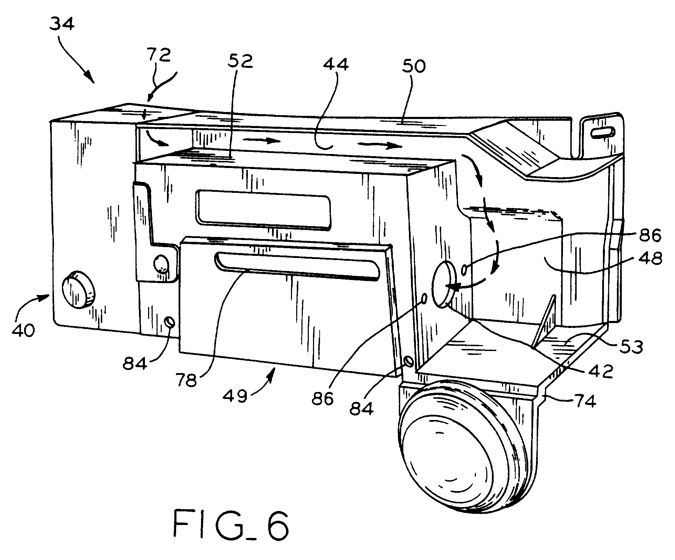

Illustrated in Figs. 1 and 2, housing assembly 32 encases engine 22, starter 26, a portion of muffler 28, and carburetor 30. Housing assembly 32 comprises duct member 34 and shroud 36. Duct member 34 pre-heats ambient air which flows into carburetor 30. Duct member 34 shown in Fig. 6 is attached to engine 22 with arcuate edge 38 of linkage shield 37 (Fig. 2) designed to fit under the flywheel and fan (not shown). Linkage shield 37, in the form of a shelf, is attached to duct member 34 and extends substantially perpendicular from the back side thereof. Linkage shield 37 acts as a barrier between the governor linkage (not shown) and the snow that passes through recoil starter 26, thereby preventing "freeze-up" of the governor linkage. The governor linkage is located between engine 22 and carburetor 30 and is a known speed control device provided with throttle lever 76 that controls engine 22 speed. Further, linkage shield 37 reduces dilution of warmed air 72 around carburetor 30 by reducing spillage of the cooling air into warm air 72.

Duct member 34 defines passageway 44 through which pre-heated air shown by arrows 72 travels (Figs. 4 and 6). Duct member 34 is made of a non-conductive material such as injection molded plastic. The plastic absorbs less heat from the air flowing to carburetor 30 than metal, for example. Thus, the plastic material of duct member 34 will not significantly lower the temperature of pre-heated air 72. As illustrated in Figs. 3 and 4, duct extension 46 of duct member 34 is provided to partially enclose muffler 28 to enhance the pre-heating process. Duct extension 46 will also withstand the hot environment and radiant heat surrounding muffler 28.

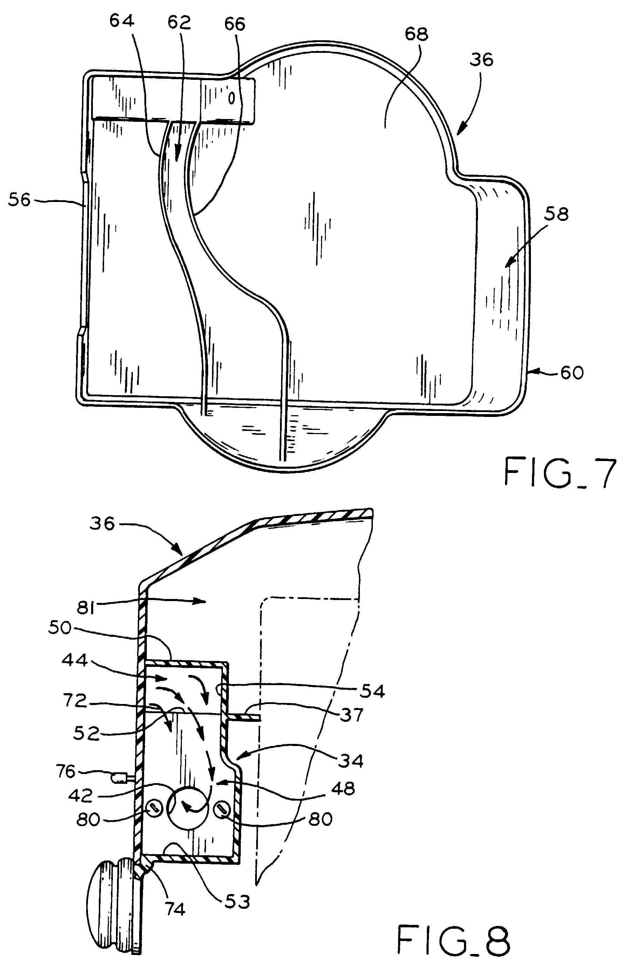

Referring now to Figs. 3 and 6, inlet 40 of passageway 44 in duct member 34 is located proximate muffler 28 while outlet 42 and chamber 48, defined by passageway 44, are located proximate carburetor 30. Passageway 44 and chamber 48 are defined on three sides by top wall 50, bottom walls 52, 53 and side wall 54, all of which are integrally formed with duct member 34. The fourth wall or side wall 56 (Fig. 8) is provided by shroud 36 and forms the outer wall of passageway 44 and chamber 48. Side wall 56 substantially seals passageway 44 and chamber 48 between inlet 40 and outlet 42, thereby eliminating leakage, which is an important part of the system function. The length of passageway 44, and thus the surface area, directly affects the temperature of pre-heated air 72. Chamber 48 completes the communication of air from duct member 34 to carburetor 30 while also providing an accumulation chamber to minimize the pulse tuning effects of a uniform intake duct. In other words, pre-heated air 72 travels through passageway 44 having a sinusoidal signal. Accumulation chamber 48 causes the signal to become linear so that pre-heated air 72 is drawn into carburetor 30 consistently and smoothly.

Duct member 34 further includes integral carburetor cover 49 shown in Figs. 2 and 6 having slot 78 which is adapted to receive throttle lever 76 of the governor linkage. Carburetor cover 49 protects carburetor 30 from being covered by snow and helps substantially contain warm air 72 around carburetor 30.

Housing assembly 32 also includes shroud 36 disposed above engine 22. Shroud 36 is connected to duct member 34 as described below. Referring to Fig. 5, overhang portion 60 of shroud 36 extends beyond the front confines of engine 22 and recoil starter 26. Shroud 36 of the housing assembly defines opening 58 on the underside thereof which allows cool ambient air 70 to enter engine 22. Overhang portion 60 also minimizes the entry of snow into engine 22. This design of shroud 36 creates a pressure drop between the area above overhang 60 and below overhang 60 at opening 58 on the underside of shroud 36. The pressure drop causes ambient air 70 to flow into the cooling fan, which is a natural occurrence. However, by providing large opening 58 on the underside of ledge 60, the velocity of ambient air 70 is reduced, allowing the majority of the snow flakes, which are heavier than air, to fall out of ambient air 70 being drawn into the cooling fan. Therefore, recoil starter 26 and the flywheel (not shown) are protected from significant amounts of snow, thereby significantly limiting of the amount of moisture entering engine 22 that can cause "freeze-up."

Referring now to Fig. 7, housing assembly 32 is provided with insulating wall 62 located intermediate opening 58 and passageway 44 (Fig. 8). Insulating wall 62 is defined by spaced partitions 64 and 66 downwardly depending from top surface 68 of shroud 36. The purpose of providing two partitions in insulating wall 62 is to prevent snow that is drawn into engine 22 with cool air 70 from contacting partition 64 which is warmed by pre-heated air 72 in chamber 81, located between shroud 36 and duct member 34. Allowing snow to contact partition 64 would result in the snow adhering to the warm surfaces of duct member 34, thereby restricting air flow and cooling.

Referring to Fig. 8, shroud 36 fits over duct member 34 and connects thereto, providing the fourth side, side wall 56, to substantially seal passageway 44 and chamber 48. Duct member 34 is attached to engine 22 by means such as screws 80 shown in Fig. 8 which engage apertures 86 (Fig. 2). As shown in Figs. 6 and 8, shroud 36 is seated on shelf 74 provided at the lower edge of chamber 48 and secured to duct member 34 by screws 80 (Figs. 2 and 4) that threadingly engage apertures 84 (Figs. 2 and 6). Shroud 36 is fixed to the blower housing of engine 22 by interlocking tabs that are integral therewith.

In operation, cool ambient air 70 drawn into duct member 34 passes over muffler 28 and by convection, the cool air is heated (Fig. 4). Pre-heated air indicated by arrows 72 then flows through passageway 44 into chamber 48, through outlet 42 of duct member 34 and into carburetor 30.

Also during operation, cool ambient air 70 in Fig. 3 is drawn into opening 58 of shroud 36 and is used to cool engine 22. Overhang 60 (Fig. 5) is configured such that snow is substantially prevented from entering opening 58, and recoil starter 26 is therefore protected from significant amounts of snow. Pre-heated air 72 being provided to carburetor 30 is insulated from cool air 70 which cools engine 22 by insulating wall 62.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A snow thrower, comprising an internal combustion engine (22) having a muffler (28) and a carburetor (30); a duct member (34) attached to said engine, said duct member partially enclosing said muffler; characterized by: said duct member (34) having an inlet (40) disposed proximate said muffler and an outlet (42) disposed proximate said carburetor, said duct member defining a passageway (44) connecting said inlet to said outlet, whereby ambient air is drawn into said duct member, pre-heated by said muffler (28) and passed through said passageway (44) to said carburetor.

2. The snow thrower of claim 1, further characterized by a shroud (36) disposed above the engine (22) and connected to said duct member (34), said shroud defining an opening (58) on an underside thereof, whereby said opening allows entry of ambient air and minimizes entry of snow.

3. The snow thrower of claim 2, characterized in that said shroud (36) defines a wall of said passageway (44).

4. The snow thrower of claim 2 or 3, further characterized by an insulating wall (62) disposed intermediate said opening (58) of said shroud and said passageway (44), whereby snow drawn in with cool air entering said opening of said shroud is prevented from contacting warmed surfaces of said duct member (34).

5. The snow thrower of claim 4, characterized in that said insulating wall (62) comprises a pair of spaced partitions (64, 66) depending downwardly from said shroud.

6. The snow thrower of any of the preceding claims, characterized in that said passageway (44) is substantially sealed between said inlet (40) and said outlet (42).

7. The snow thrower of claim 1, characterized by a carburetor cover (49) at least partially covering said carburetor (30).

8. The snow thrower of claim 7, characterized in that said carburetor cover (49) comprises a slot (78) adapted to receive a lever (76) therethrough.
